# EUROPEAN PATENT SPECIFICATION

(11) **EP 4 109 987 B1**
(45) Date of publication and mention of the grant of the patent: **25.06.2025**
(21) Application number: 20920104.5
(22) Date of filing: 17.02.2020
(51) Int. Cl.: H04W 72/04, H04W 72/12, H04W 28/06

(54) **TERMINAL, WIRELESS COMMUNICATION METHOD, AND BASE STATION**
BENUTZERENDGERÄT, DRAHTLOSKOMMUNIKATIONSVERFAHREN UND BASISSTATION
TERMINAL, PROCÉDÉ DE COMMUNICATION SANS FIL ET STATION DE BASE

(43) Date of publication of application: 28.12.2022
(73) Proprietor: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2020/006085
(87) International publication number: WO 2021/166036

(56) References cited:
- "3rd Generation Partnership Project; Technical Specification Group Radio Access Network; NR; Physical layer procedures for data (Release 16)", vol. RAN WG1, no. V16.0.0, 14 January 2020 (2020-01-14), pages 1 - 147, XP051860777, Retrieved from the Internet <URL:ftp://ftp.3gpp.org/Specs/archive/38_series/38.214/38214-g00.zip 38214-g00.docx> [retrieved on 20200114]
- HUAWEI ET AL: "Running 38.331 CR for NR_L1enh_URLLC", vol. RAN WG2, no. Athens, Greece; 20200224 - 20200228, 24 January 2020 (2020-01-24), XP051845869, Retrieved from the Internet <URL:https://ftp.3gpp.org/Email_Discussions/RAN2/%5BRAN2%23108%5D/%5B108%2328%5D%5BR16%20RRC%5D%20RRC%20Merge/38331/UPDATE_Running%2038.331%20CR%20for%20NR_L1enh_URLLC_v5_SynCheck.doc> [retrieved on 20200124]
- NTT DOCOMO ET AL: "Remaining issues for PUSCH enhancements for Rel.16 URLLC", vol. RAN WG1, no. e-Meeting; 20200224 - 20200306, 14 February 2020 (2020-02-14), XP052343982, Retrieved from the Internet <URL:https://ftp.3gpp.org/tsg_ran/WG1_RL1/TSGR1_100_e/Docs/R1-2000921.zip R1-2000921 PUSCH enhancements.docx> [retrieved on 20200214]
- SAMSUNG: "Remaining issues for PUSCH", vol. RAN WG1, no. e-Meeting; 20200224 - 20200306, 14 February 2020 (2020-02-14), XP052343690, Retrieved from the Internet <URL:https://ftp.3gpp.org/tsg_ran/WG1_RL1/TSGR1_100_e/Docs/R1-2000627.zip R1-2000627 Remaining issues for PUSCH.docx> [retrieved on 20200214]
- APPLE INC.: "Remaining issues on PUSCH enhancements", 3GPP DRAFT; R1-2000856, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 15 February 2020 (2020-02-15), Mobile Competence Centre ; 650, route des Lucioles ; F-06921 Sophia-Antipolis Cedex ; France, XP051853474
- INTEL CORPORATION: "Remaining details on enhanced UL CG PUSCH for URLLC", 3GPP DRAFT; R1-2001085, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 15 February 2020 (2020-02-15), Mobile Competence Centre ; 650, route des Lucioles ; F-06921 Sophia-Antipolis Cedex ; France, XP051853591
- NTT DOCOMO, INC.: "Remaining issues for PUSCH enhancements for Rel.16 URLLC", 3GPP DRAFT; R1-2000921, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 14 February 2020 (2020-02-14), Mobile Competence Centre ; 650, route des Lucioles ; F-06921 Sophia-Antipolis Cedex ; France, XP051853100

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

"3rd Generation Partnership Project; Technical Specification Group Radio Access Network; NR; Physical layer procedures for data (Release 16)",3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. V16.0.0 14 January 2020 (2020-01-14), pages 1-147 relates to the characteristics of the physicals layer procedures of data channels for 5G-NR.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, repetitive transmissions of a UL data channel (for example, a PUSCH) are supported. A UE performs control so as to perform transmission of the PUSCH through a plurality of slots (for example, K consecutive slots) on the basis of a repetition factor K configured from a network (for example, a base station). In other words, when the repetitive transmissions are performed, each PUSCH is transmitted in a different slot (for example, units of slots).

On the other hand, for Rel. 16 (or later versions), performing a plurality of PUSCH transmissions in one slot when performing repetitive transmissions of a PUSCH is under study. In other words, transmission of each PUSCH is performed in units shorter than the slot (for example, units of sub-slots or units of mini-slots).

In this case, it is also assumed that a symbol (for example, a DL symbol or the like) unavailable for PUSCH transmission is included in the slot. Thus, in addition to information related to a slot format indicating a direction of transmission of each symbol, notifying the UE of information related to the symbol (or a symbol pattern) unavailable for the PUSCH transmission is also under study.

However, how to control UL transmission of a PUSCH or the like when the information related to the slot format and information related to an invalid symbol pattern are notified has not been fully studied.

Thus, an object of the present disclosure is to provide a terminal, a radio communication method, and a base station that can appropriately control UL transmission even when an invalid symbol pattern is notified to the terminal.

### Solution to Problem

The present invention is defined in the appended independent claims. Further preferred embodiments are defined in the dependent claims.

A terminal according to one aspect of the present disclosure includes a receiving section that receives first information related to a slot format and second information related to a symbol pattern invalid in transmission of an uplink shared channel, and a control section that controls the transmission of the uplink shared channel to be performed in a time section designated as UL by at least the first information and not designated as invalid by the second information.

### Advantageous Effects of Invention

According to one aspect of the present disclosure, it is possible to appropriately control UL transmission even when an invalid symbol pattern is notified to a terminal.

### Brief Description of Drawings

FIGS. 1A and 1B are each a diagram to show an example of repetitive transmissions of a PUSCH;
FIG. 2 is a diagram to show another example of the repetitive transmissions of the PUSCH;
FIGS. 3A and 3B are diagrams to show an example of invalid symbol pattern information and actual transmission control;
FIGS. 4A and 4B are each a diagram to show an example of a case where a plurality of configured grants are configured;
FIG. 5 is a diagram to show an example of UL transmission control in the present embodiment;
FIG. 6 is a diagram to show another example of the UL transmission control in the present embodiment;
FIG. 7 is a diagram to show another example of the UL transmission control in the present embodiment;
FIG. 8 is a diagram to show another example of the UL transmission control in the present embodiment;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

### Description of Embodiments

### (Repetitive Transmissions)

In Rel. 15, repetitive transmissions are supported in data transmission. For example, a base station (network (NW) or gNB) repetitively performs transmissions of DL data (for example, downlink shared channels (PDSCHs)) a given number of times. Alternatively, a UE performs repetitions of UL data (for example, an uplink shared channel (PUSCH)) a given number of times.

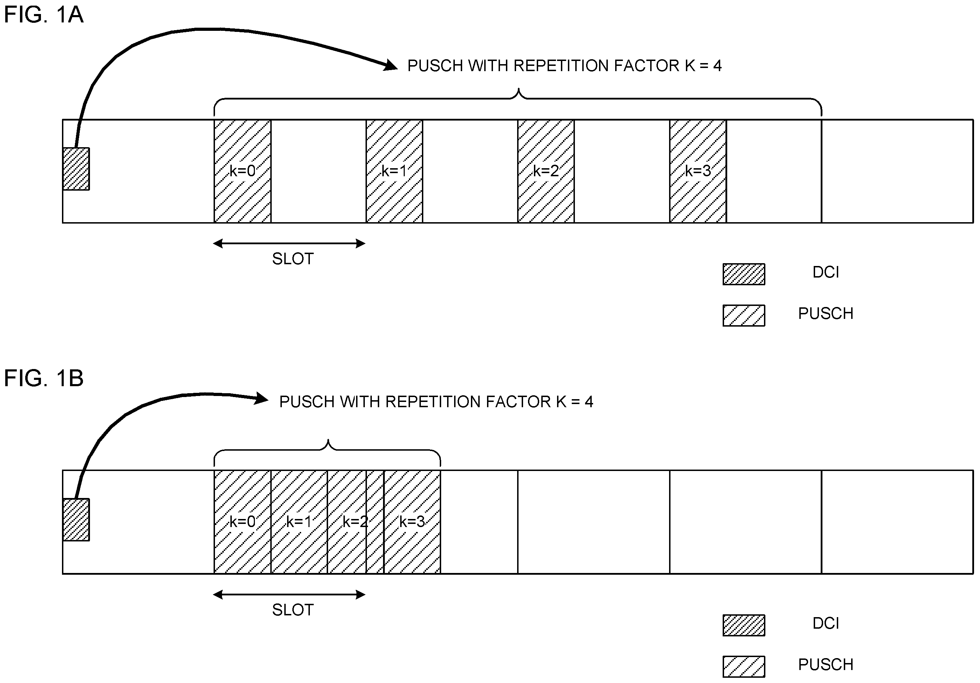

FIG. 1A is a diagram to show an example of repetitive transmissions of the PUSCH. FIG. 1A shows an example in which the PUSCH with a given number of repetitions is scheduled by single DCI. The number of the repetitions is also referred to as a repetition factor K or an aggregation factor K.

In FIG. 1A, the repetition factor K = 4, but a value of K is not limited to this. The n-th repetition is also referred to as an n-th transmission occasion or the like, and may be identified by a repetition index k (0 ≤ k ≤ K - 1). FIG. 1A shows repetitive transmissions of a PUSCH (for example, a dynamic grant-based PUSCH) dynamically scheduled by the DCI, but the repetitive transmissions may be applied to repetitive transmissions of a configured grant-based PUSCH.

For example, in FIG. 1A, the UE receives information (for example, aggregationFactorUL or aggregationFactorDL) indicating the repetition factor K by higher layer signaling. Here, for example, the higher layer signaling may be any one of RRC (Radio Resource Control) signaling, MAC (Medium Access Control) signaling, broadcast information, and the like, or combinations of these.

For example, the MAC signaling may use a MAC control element (MAC CE), a MAC PDU (Protocol Data Unit), and the like. For example, the broadcast information may be a master information block (MIBs), a system information block (SIB), minimum system information (RMSI (Remaining Minimum System Information)), and the like.

The UE controls PDSCH reception processing (for example, at least one of reception, demapping, demodulation, and decoding) or PUSCH transmission processing (for example, at least one of transmission, mapping, modulation, and coding) in K consecutive slots on the basis of at least one field value (or information indicated by the field value) below in the DCI:
- allocation of time domain resources (for example, a start symbol, the number of symbols in each slot, or the like),
- allocation of frequency domain resources (for example, a given number of resource blocks (RBs) or a given number of resource block groups (RBGs)),
- modulation and coding scheme (MCS) index,
- configuration of PDSCH demodulation reference signal (DMRS), and
- transmission configuration indication (TCI (Transmission Configuration Indication or Transmission Configuration Indicator)) state (TCI state (TCI-state)).

Mapping of identical symbol may be applied between the K consecutive slots. FIG. 1A shows a case where a PUSCH in each slot is mapped to a given number of symbols from the head of the slot. Mapping of the identical symbol between slots may be determined as described in the above-described time domain resource allocation.

For example, the UE may determine symbol mapping in each slot on the basis of a start symbol S and the number of symbols L determined on the basis of a value m of a given field (for example, a TDRA field) in the DCI. Note that the UE may determine the first slot on the basis of K2 information determined on the basis of a value m of the given field (for example, the TDRA field) of the DCI.

On the other hand, between the K consecutive slots, redundancy versions (RVs) applied to a TB based on identical data may be identical, or may be at least partially different from each other. For example, an RV applied to the TB in the n-th slot (transmission occasion or repetition) may be determined on the basis of a value of a given field (for example, an RV field) in the DCI.

When resources allocated in the K consecutive slots have different communication directions in UL, DL, or Flexible and at least one symbol of each slot designated by at least one of uplink/downlink communication direction indication information for TDD control (for example, "TDD-UL-DL-ConfigCommon" or "TDD-UL-DL-ConfigDedicated" of RRC IE) and a Slot format indicator of DCI (for example, DCI format 2_0), it may be assumed that resources of a slot including the symbol are not transmitted (or received).

In Rel. 15, as shown in FIG. 1A, a PUSCH is repetitively transmitted through a plurality of slots (in units of slots), but in Rel. 16 (or later versions), it is assumed that repetitive transmissions of a PUSCH are performed in units shorter than the slot (for example, units of sub-slots, units of mini-slots, or units of a given number of symbols) (see FIG. 1B).

For example, the UE performs a plurality of PUSCH transmissions in one slot. When the repetitive transmissions are performed in units of sub-slots, depending on the number of repetitive transmissions (for example, K), a data allocation unit (data length in each repetitive transmission), and the like, a case where one transmission among a plurality of repetitive transmissions crosses a slot boundary (slot-boundary) occurs. In FIG. 1B, a PUSCH with k = 2 is arranged across the slot boundary. In such a case, the PUSCH is divided (or segmented) by the slot boundary as a reference for transmission.

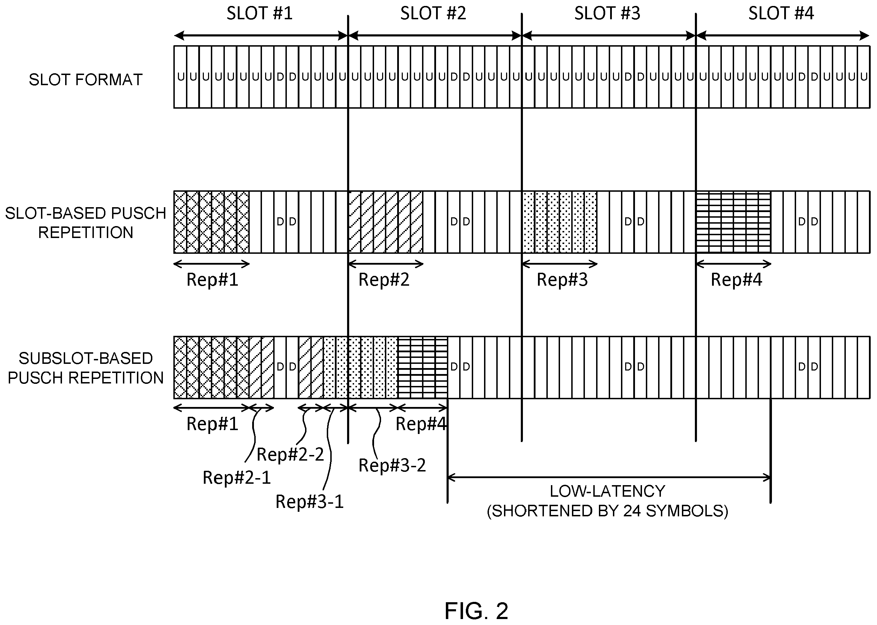

A case where a symbol (for example, a DL symbol or the like) unavailable for PUSCH transmission is included in the slot is also assumed. In such a case, it is assumed that the PUSCH transmission is performed by using symbols except the DL symbol. For example, in symbols to which a PUSCH is mapped, when the DL symbol is included in the middle symbol, the PUSCH transmission may be performed such that the PUSCH is not mapped to the DL symbol portion. In this case, the PUSCH may be divided (or segmented) (see FIG. 2).

FIG. 2 shows a case where a PUSCH with k = 1 (Rep #2) is divided into two portions (Reps #2-1 and #2-2) by DL symbols and a PUSCH with k = 2 (Rep #3) is divided into two portions (Reps #3-1 and #3-2) by a slot boundary in sub-slot-based repetitive transmissions. Note that the sub-slot-based repetitive transmissions as shown in FIG. 2 may be referred to as a repetitive transmission type B (for example, PUSCH repetition Type B).

Performing repetitive transmissions of a PUSCH on a sub-slot basis allows the repetitive transmissions of the PUSCH to be completed more quickly as compared to a case where the repetitive transmissions are performed in units of slots.

FIG. 2 shows a case where UL symbols (U) and DL symbols (D) are notified as a slot format, but formats other than that (for example, Flexible symbols (F) for which DL or UL symbols are not explicitly designated) may be notified. In the Flexible symbols, the UE may perform UL transmission or DL transmission, or may perform a specific operation (or restrict a specific operation). Information related to the slot format may be notified by at least one of higher layer signaling and DCI (for example, dynamic SFI).

### <Invalid Symbol Pattern>

When the repetitive transmission type B is applied to PUSCH transmission, notifying the UE of information related to a symbol (or a symbol pattern) unavailable for the PUSCH transmission is also under study. The symbol pattern unavailable for the PUSCH transmission may be referred to as an invalid symbol pattern and the like.

For repetitive transmissions of a dynamic grant-based PUSCH dynamically scheduled by the DCI, notifying the invalid symbol pattern by using at least one of the higher layer signaling and the DCI is under study. The DCI may be in a given DCI format (for example, at least one of DCI formats 0_1 and 0_2).

For example, information related to the invalid symbol pattern unavailable for the PUSCH transmission is notified by using a first higher layer parameter. Whether the information related to the invalid symbol pattern is applied may be notified to the UE by using the DCI. In this case, a bit field (a notification field for notifying whether the invalid symbol pattern is applied) for indicating whether the information related to the invalid symbol pattern is applied may be configured for the DCI.

Whether the notification field (or additional bits) in the DCI is configured may be notified to the UE by using a second higher layer parameter. In other words, the UE may, when the information related to the invalid symbol pattern is notified by the first higher layer parameter, determine the presence or absence of the application of the information related to the invalid symbol pattern on the basis of the second higher layer parameter and the DCI.

When the first higher layer parameter is not notified or configured, the UE may control the PUSCH transmission without considering the invalid symbol pattern. As the slot format, symbols notified by higher layer signaling or the like may be used as flexible symbols (F) for the PUSCH transmission. In this case, segmentation of the PUSCH may be controlled on the basis of at least one of a DL symbol and a slot boundary. As to symbols to which the PUSCH is mapped, the UE performs control, when a symbol notified as the DL symbol is present, so as not to use the symbol for the PUSCH transmission.

When the first higher layer parameter is notified or configured, the UE may determine(judge) whether the invalid symbol pattern is applied on the basis of the second higher layer parameter and the DCI. For example, when addition of additional bits (or a given field) to indicate whether the invalid symbol pattern is applied for the DCI is indicated by the second higher layer parameter, the UE may determine whether the invalid symbol pattern is applied on the basis of the given field.

When the given field of the DCI is a first value (for example, zero), it may be indicated that the invalid symbol pattern notified by the first higher layer parameter is not applied. In this case, the UE controls the PUSCH transmission without considering invalid symbol pattern information. For example, as the slot format, symbols notified by higher layer signaling or the like as flexible symbols (F) may be used for the PUSCH transmission. In this case, segmentation of the PUSCH may be controlled on the basis of at least one of a DL symbol and a slot boundary. As to the symbols to which the PUSCH is mapped, the UE performs control, when a symbol notified as the DL symbol is present, so as not to use the symbol for the PUSCH transmission.

When the given field of the DCI is a second value (for example, one), it may be indicated that the invalid symbol pattern notified by the first higher layer parameter is applied. In this case, the UE controls the PUSCH transmission in consideration of the invalid symbol pattern information. For example, the UE performs control so as not to use DL symbols and symbols notified as invalid symbols for the PUSCH transmission. In this case, segmentation of the PUSCH may be controlled on the basis of at least one of the DL symbol, invalid symbol pattern, and slot boundary. As to the symbols to which the PUSCH is mapped, the UE performs control so as to perform the PUSCH transmission by using symbols other than the DL symbols and the symbols notified as invalid symbols.

When the addition of additional bits (or a given field) to indicate whether the invalid symbol pattern is applied for the DCI is not indicated by the second higher layer parameter or when the second higher layer parameter is not notified, the UE may apply the invalid symbol pattern.

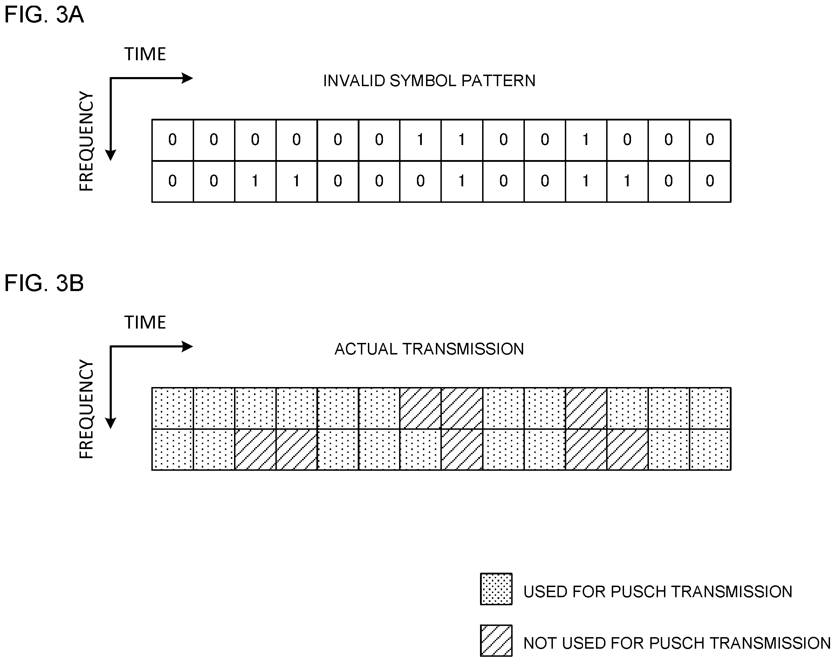

Note that it is only necessary that the first higher layer parameter be information to notify a symbol pattern invalid in PUSCH transmission, and, for example, a bitmap format may be applied (see FIG. 3A). FIG. 3A is a diagram to show an example of a case where the invalid symbol pattern is defined by a bitmap (2-D bitmap) in relation to a time domain and frequency domain. The UE may determine resources available for the PUSCH transmission in the time domain and frequency domain on the basis of information related to the invalid symbol pattern (see FIG. 3B).

Note that a scheme used for notification of a pattern of a rate match pattern (rateMatchPattern) in a time domain for PDSCHs may be applied to the first higher layer parameter.

Incidentally, it is assumed that a repetition type B is supported for configured grant-based PUSCH transmission in addition to dynamic grant-based PUSCH transmission.

### <Configured Grant-based Transmission (Type 1 and Type 2)>

Dynamic grant-based transmission is a method for performing UL transmission by using an uplink shared channel (for example, a PUSCH (Physical Uplink Shared Channel)) on the basis of a dynamic UL grant (dynamic grant).

Configured grant-based transmission is a method for performing UL transmission by using an uplink shared channel (for example, a PUSCH) on the basis of a UL grant configured by a higher layer (which may be referred to as, for example, a configured grant, a configured UL grant, and so on). In the configured grant-based transmission, UL resources have already been allocated to the UE and the UE can perform UL transmission autonomously by using configured resources, and thus achievement of low-latency communication can be expected.

The dynamic grant-based transmission may be referred to as a dynamic grant-based PUSCH, UL transmission with a dynamic grant, a PUSCH with a dynamic grant, UL transmission with a UL grant, UL grant-based transmission, UL transmission (for which transmission resources are configured) scheduled by a dynamic grant, and so on.

The configured grant-based transmission may be referred to as a configured grant-based PUSCH, UL transmission with a configured grant (UL Transmission with configured grant), a PUSCH with a configured grant (PUSCH with configured grant), UL transmission without a UL grant (UL Transmission without UL grant), UL grant-free transmission, UL transmission (for which transmission resources are configured) scheduled by a configured grant, and so on.

The configured grant-based transmission may be defined as one kind of UL semi-persistent scheduling (SPS). In the present disclosure, the "configured grant," "SPS," "SPS/configured grant," and the like may be interchangeably interpreted.

For the configured grant-based transmission, several types (Type 1, Type 2, and the like) are under study.

In configured grant type 1 transmission, parameters used for the configured grant-based transmission (which may be referred to as configured grant-based transmission parameters, configured grant parameters, and so on) are configured for the UE by only using higher layer signaling.

In configured grant type 2 transmission, the configured grant parameters are configured for the UE by the higher layer signaling. In the configured grant type 2 transmission, at least a part of the configured grant parameters may be notified to the UE by physical layer signaling (for example, downlink control information (DCI) for activation mentioned below).

Here, for example, the higher layer signaling may be any one of RRC (Radio Resource Control) signaling, MAC (Medium Access Control) signaling, broadcast information, and the like, or combinations of these.

For example, the MAC signaling may use a MAC control element (MAC CE), a MAC PDU (Protocol Data Unit), and the like. The broadcast information may be, for example, a master information block (MIB), a system information block (SIB), minimum system information (RMSI (Remaining Minimum System Information)), other system information (OSI), or the like.

The configured grant parameters may be configured for the UE by using a ConfiguredGrantConfig information element of RRC. The configured grant parameters may include, for example, information to specify configured grant resources. The configured grant parameters may include, for example, information related to a configured grant index, a time offset, a periodicity, the number of repetitive transmissions of a transport block (TB) (the number of the repetitive transmissions may be expressed as K), a redundancy version (RV) sequence used in repetitive transmissions, the above-mentioned timer, and the like.

Here, the periodicity and the time offset may each be expressed in units of symbols, slots, subframes, frames, or the like. The periodicity may be indicated by, for example, a given number of symbols. The time offset may be indicated by, for example, an offset for timing of a given index (slot number = 0 and/or system frame number = 0 or the like). The number of the repetitive transmissions may be an arbitrary integer, and may be, for example, 1, 2, 4, 8, or the like. When the number of the repetitive transmissions is n (> 0), the UE may perform configured grant-based PUSCH transmission for a given TB by using n transmission occasions.

The UE may, when the configured grant type 1 transmission is configured, determine that one or a plurality of configured grants have been triggered. The UE may perform PUSCH transmission by using a configured resource for configured grant-based transmission (which may be referred to as a configured grant resource, a transmission occasion, and so on). Note that even when the configured grant-based transmission is configured, the UE may skip the configured grant-based transmission when there is no data in a transmit buffer.

The UE may, when the configured grant type 2 transmission is configured and a given activation signal is notified, determine that one or a plurality of configured grants have been triggered (or activated). The given activation signal (DCI for activation) may be DCI (PDCCH) CRC (Cyclic Redundancy Check)-scrambled by a given identifier (for example, a CS-RNTI (Configured Scheduling RNTI)). Note that the DCI may be used for control for deactivation, retransmission, or the like of the configured grant.

The UE may determine, on the basis of the above-described given activation signal, whether to perform the PUSCH transmission by using the configured grant resource configured by a higher layer. The UE may release (which may be referred to as deactivate, and so on), on the basis of DCI to deactivate a configured grant or expiration of a given timer (elapse of given period of time), a resource (PUSCH) corresponding to the configured grant.

Note that even when the configured grant-based transmission is activated (in an active state), the UE may skip the configured grant-based transmission when there is no data in a transmit buffer.

Note that each of the dynamic grant and configured grant may be referred to as an actual UL grant. In other words, the actual UL grant may be higher layer signaling (for example, a ConfiguredGrantConfig information element of RRC), physical layer signaling (for example, the above-described given activation signal), or a combination of these.

### <Configured Grant-based Configuration>

In existing radio communication systems (for example, Rel. 15 (or earlier versions)), a configured grant (for example, UL CG configuration or ConfiguredGrantConfig) configured for one cell (or carrier or BWP) has been limited to one configured grant. In contrast, in future radio communication systems (for example, Rel. 16 (or later versions)), configuring a plurality of configured grants for one BWP (or carrier or cell) is under study. As an example, configuration of a given number (for example, up to 12) of configured grants may be supported for each BWP.

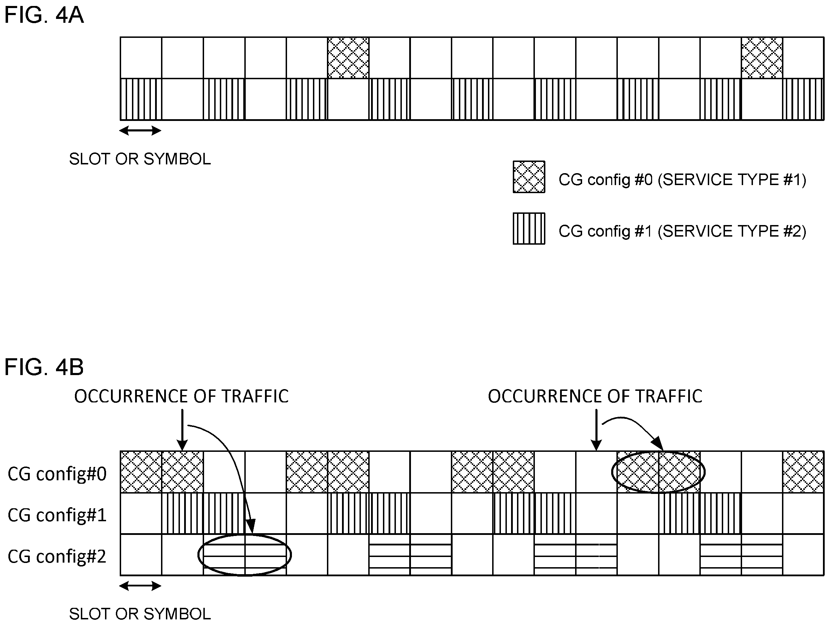

FIG. 4A shows a case where configured grants (CG config) are configured separately for each of a plurality of service types (here, two service types). Specifically, FIG. 4A shows a case where a first configured grant (CG config #0) is configured for service type #1 (for example, Voice service) and a second configured grant (CG config #1) is configured for service type #2 (for example, low-latency service). The first configured grant and the second configured grant may be configured with different conditions (for example, periodicities, transmission occasions, or the like) for PUSCH transmission from each other.

FIG. 4B shows a case where a plurality of configured grants (here, CG config #0 to #2) corresponding to different transmission occasions are configured. The UE may select one configured grant from the plurality of the configured grants (here, CG config #0 to #2) to perform the PUSCH transmission on the basis of a timing at which traffic has occurred.

For example, the UE may, when traffic has occurred, select a configured grant configuration capable of transmitting the traffic (PUSCH) on the basis of a condition with low-latency and a greater number of repetitions to control the PUSCH transmission. FIG. 4B shows a case where CG config #2 is used for traffic that has first occurred and CG config #1 is used for traffic that has subsequently occurred.

As mentioned above, in the future radio communication systems, it is assumed that notification or configuration of an invalid symbol (or an invalid symbol pattern) is supported for PUSCH transmission to which the repetitive transmission type B is applied. However, when the invalid symbol pattern is supported, the inventors of the present invention focused on the following cases that have not been fully studied.

How to control PUSCH transmission in a case (case 1) where notification of an invalid symbol pattern is supported for a time section (for example, a symbol) designated as UL by a slot format is an issue. For example, in a case where a UL symbol and an invalid symbol notified by the slot format conflict with each other, how to control the presence or absence of the PUSCH transmission in the symbol is an issue. The inventors of the present invention studied how to control the PUSCH transmission in such a case, and came up with the idea of one aspect of the present embodiment.

In a case (case 2) where an invalid symbol pattern is applied to configured grant-based PUSCH transmission in which configuration of a plurality of configured grants (CG config) is supported, how to control notification or configuration of the invalid symbol pattern is an issue. Thus, the inventors of the present invention studied configuration of an invalid symbol pattern for configured grant-based PUSCH transmission in which configuration of a plurality of configured grants is allowed, and came up with the idea of another aspect of the present embodiment.

Hereinafter, embodiments according to the present disclosure will be described in detail with reference to the drawings. Aspects according to respective embodiments may each be employed individually, or may be employed in combination. Note that aspects below can be applied to at least one of dynamic grant-based PUSCH transmission and configured grant-based PUSCH transmission.

### (First Aspect)

In a first aspect, an example of PUSCH transmission control in a case where notification of an invalid symbol pattern is supported for a time section (for example, a symbol for which at least UL or Flexible is designated) notified by a slot format will be described.

A UE receives information related to the slot format (hereinafter described as slot format information) and information related to the invalid symbol pattern (hereinafter described as invalid symbol pattern information) from a network (for example, a base station). The slot format information may be transmitted to the UE by at least one of higher layer signaling and DCI. The UE may determine, on the basis of the slot format information, a transmission direction configured for each symbol.

The invalid symbol pattern information may be notified or configured for the UE by the higher layer signaling. When notification of the invalid symbol pattern information is configured, the UE may receive at least one of information (for example, the DCI) to notify whether the invalid symbol pattern is applied and information (for example, the higher layer signaling) to notify whether a given field is configured for the DCI, the given field being used for notification about whether the invalid symbol pattern information is applied.

The UE that has acquired the slot format information and the invalid symbol pattern information may employ at least one of the following option 1-1 to option 1-3 to control the PUSCH transmission.

### <Option 1-1>

A symbol designated(indicated) as UL by the slot format information may be designated as an invalid symbol by the invalid symbol pattern information. In other words, the symbol designated as UL by the slot format information may be designated as non-invalid (valid) in the PUSCH transmission by the invalid symbol pattern information.

The base station configures a bit value (for example, zero) indicating non-invalid (or valid) for a symbol to be configured as UL in the invalid symbol pattern information to notify or configure for the UE. The symbol to be configured as UL may be a symbol semi-statically designated (by, for example, higher layer signaling) as UL by the slot format information.

In other words, the base station may perform control so as to avoid a case that the symbol designated as UL by the slot format information and the symbol designated as invalid by the invalid symbol pattern information conflict with each other.

The UE may not assume that the symbol designated as UL by the slot format information is designated as invalid by the invalid symbol pattern information (for example, a bit value "1" is configured). In other words, the UE may assume that the symbol designated as UL by the slot format information is designated as non-invalid by the invalid symbol pattern information (for example, a bit value "0" is configured).

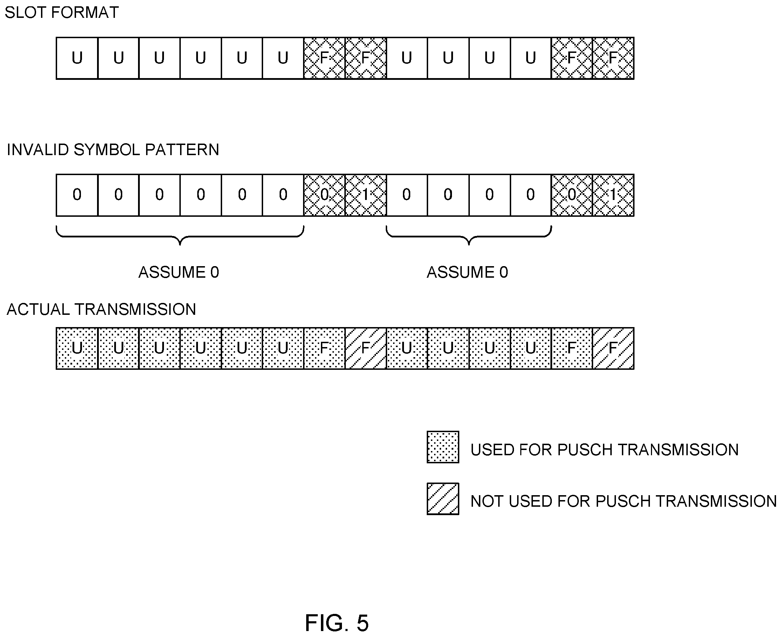

When the UE applies the invalid symbol pattern, the UE may control PUSCH transmission to be performed by using symbols except the following symbols (see FIG. 5). In other words, the UE may control the PUSCH transmission using the following symbols not to be performed.
- Symbols designated as invalid symbols (for example, a bit value "1" is configured)
- Symbols designated as DL

FIG. 5 shows an example of a case where actual transmission is controlled on the basis of the slot format information and the invalid symbol pattern information. FIG. 5 shows a case where symbols designated as UL by the slot format information are designated as non-invalid by the invalid symbol pattern information (for example, a bit value "0" is configured).

The UE may perform control so as to use a symbol designated as Flexible (F) by the slot format information and designated as non-invalid by the invalid symbol pattern information (for example, a bit value "0" is configured) for the PUSCH transmission. On the other hand, the UE may perform control so as not to use a symbol designated as Flexible (F) by the slot format information and designated as invalid by the invalid symbol pattern information (for example, a bit value "1" is configured) for the PUSCH transmission.

Thus, the symbols designated as UL are not designated as the invalid symbols by the invalid symbol pattern information, and thus it is possible to appropriately perform PUSCH transmission by using the slot format information and the invalid symbol pattern information.

### {Variations}

Symbols designated as DL by the slot format information may be designated as invalid symbols by the invalid symbol pattern information (for example, a bit value "1" is configured). Alternatively, the invalid symbol pattern information may not be notified or configured for the symbols designated as DL by the slot format information. Symbols to be configured as DL may be symbols semi-statically designated (by, for example, higher layer signaling) as DL by the slot format information.

### <Option 1-2>

A case that a symbol designated as UL by the slot format information and a symbol designated as invalid by the invalid symbol pattern information conflict with each other may be allowed. Here, the conflict corresponds to a case where information (PUSCH transmission enabled) designated by the slot format information and information (PUSCH transmission disabled) designated by the invalid symbol pattern information for the same symbol are different from each other.

In this case, the symbol designated as UL by the slot format information may transmit the PUSCH even when being designated as an invalid symbol by the invalid symbol pattern information. For the symbol designated as UL by the slot format information, the UE may control PUSCH transmission to be performed regardless of contents designated by the invalid symbol pattern information (or determine that the PUSCH transmission is enabled). In other words, the slot format information may have a higher priority in application than the invalid symbol pattern information.

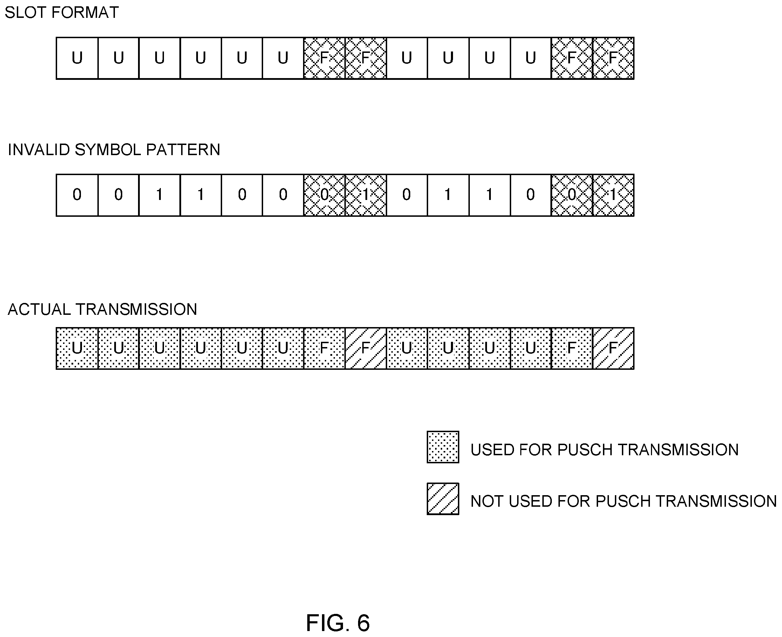

When the UE applies the invalid symbol pattern, the UE may control PUSCH transmission to be performed by using symbols except the following symbols (see FIG. 6). In other words, the UE may control the PUSCH transmission using the following symbols not to be performed.
- Symbols (for example, Flexible symbols) other than symbols designated as UL, the symbols being designated as invalid (for example, a bit value "1" is configured)
- Symbols designated as DL

FIG. 6 shows an example of a case where actual transmission is controlled on the basis of the slot format information and the invalid symbol pattern information. FIG. 6 shows a case where it is allowed that symbols designated as UL by the slot format information are designated as invalid by the invalid symbol pattern information (for example, a bit value "1" is configured).

When the symbols designated as UL by the slot format information are designated as invalid by the invalid symbol pattern information (for example, a bit value "1" is configured), the UE may control PUSCH transmission to be performed by using the symbols. In other words, the UE may ignore the invalid symbol pattern information to designate the symbols designated as UL by the slot format information as invalid.

The UE may perform control so as to use a symbol designated as Flexible (F) by the slot format information and designated as non-invalid by the invalid symbol pattern information (for example, a bit value "0" is configured) for the PUSCH transmission. On the other hand, the UE may perform control so as not to use a symbol designated as Flexible (F) by the slot format information and designated as invalid by the invalid symbol pattern information (for example, a bit value "1" is configured) for the PUSCH transmission.

Thus, when a given symbol is designated as UL, UL transmission is performed by using the given symbol regardless of contents of the invalid symbol pattern information, and thus it is possible to appropriately perform PUSCH transmission even when the slot format information and invalid symbol pattern information for the given symbol conflict with each other.

### {Variations}

A case that symbols designated as DL by the slot format information are designated as not being invalid symbols or designated as being with enabled PUSCH transmission by the invalid symbol pattern information (for example, a bit value "0" is configured) may be allowed. In such a case, the UE may control the PUSCH transmission not to be performed regardless of contents designated by the invalid symbol pattern information (or determine that the PUSCH transmission is disabled).

Alternatively, the invalid symbol pattern information may not be notified or configured for the symbols designated as DL by the slot format information. The symbols to be configured as DL may be symbols semi-statically designated (by, for example, higher layer signaling) as DL by the slot format information.

### <Option 1-3>

A case that a symbol designated as UL by the slot format information and a symbol designated as invalid by the invalid symbol pattern information conflict with each other may be allowed.

In this case, when the symbol designated as UL by the slot format information is designated as an invalid symbol by the invalid symbol pattern information, PUSCH transmission may not be performed by using the symbol. For the symbol designated as UL by the slot format information, the UE may control PUSCH transmission to be performed on the basis of contents designated by the invalid symbol pattern information. In other words, the invalid symbol pattern information may have a higher priority in application than the slot format information.

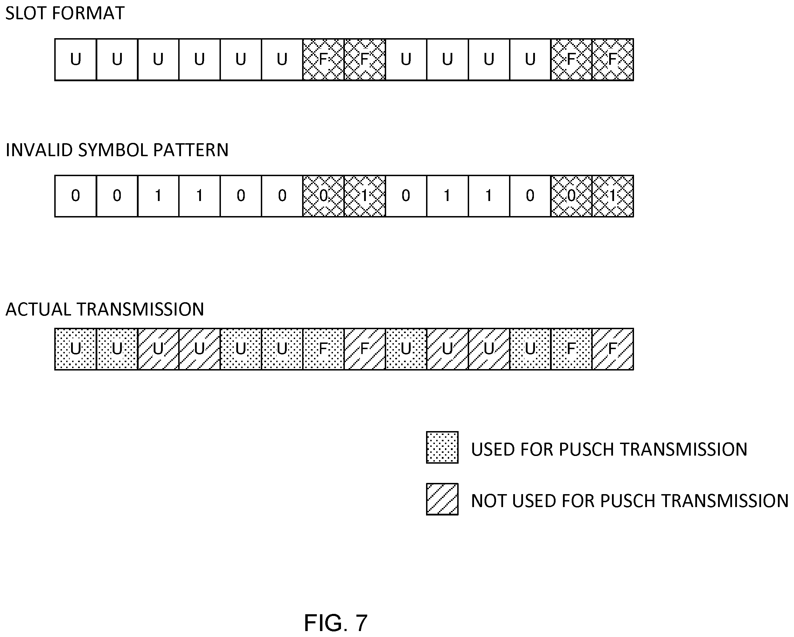

When the UE applies the invalid symbol pattern, the UE may control the PUSCH transmission to be performed by using symbols except the following symbols (see FIG. 7). In other words, the UE may control the PUSCH transmission using the following symbols not to be performed.
- Symbols designated as invalid symbols (for example, a bit value "1" is configured)
- Symbols designated as DL

FIG. 7 shows an example of a case where actual transmission is controlled on the basis of the slot format information and the invalid symbol pattern information. FIG. 7 shows a case where it is allowed that symbols designated as UL by the slot format information are designated as invalid by the invalid symbol pattern information (for example, a bit value "1" is configured).

When the symbols designated as UL by the slot format information are designated as invalid by the invalid symbol pattern information (for example, a bit value "1" is configured), the UE may control PUSCH transmission using the symbols not to be performed. In other words, for the symbols designated as invalid by the invalid symbol pattern information, the UE may ignore information (for example, UL) designated by the slot format information.

The UE may perform control so as to use a symbol designated as Flexible (F) by the slot format information and designated as non-invalid by the invalid symbol pattern information (for example, a bit value "0" is configured) for the PUSCH transmission. On the other hand, the UE may perform control so as not to use a symbol designated as Flexible (F) by the slot format information and designated as invalid by the invalid symbol pattern information (for example, a bit value "1" is configured) for the PUSCH transmission.

Thus, the presence or absence of UL transmission is determined on the basis of contents of the invalid symbol pattern information even when a given symbol is designated as UL, and thus it is possible to appropriately control PUSCH transmission even when the slot format information and invalid symbol pattern information for the given symbol conflict with each other.

### {Variations}

A case that symbols designated as DL by the slot format information are designated as not being invalid symbols or designated as being with enabled PUSCH transmission by the invalid symbol pattern information (for example, a bit value "0" is configured) may be allowed. In such a case, the UE may control the PUSCH transmission not to be performed regardless of contents designated by the invalid symbol pattern information (or determine that the PUSCH transmission is disabled).

Alternatively, the UE may control PUSCH transmission to be performed in accordance with the contents designated by the invalid symbol pattern information. Alternatively, the invalid symbol pattern information may not be notified or configured for the symbols designated as DL by the slot format information.

### (Second Aspect)

In a second aspect, an example of a method for configuring an invalid symbol pattern for PUSCH transmission in a case where configuration of a plurality of configured grants (CG config) is supported for configured grant-based PUSCH transmission will be described.

In PUSCH transmission to support configuration of the plurality of the configured grants, at least one of invalid symbol pattern configurations 1 to 3 below may be applied.

### <Invalid Symbol Pattern Configuration 1>

An invalid symbol pattern (or invalid symbol) may be configured separately for each configured grant configuration (CG config). For example, when a plurality of configured grants are configured for the configured grant-based PUSCH transmission, an invalid symbol pattern may be associated separately (or different invalid symbol pattern may be associated) for each configured grant.

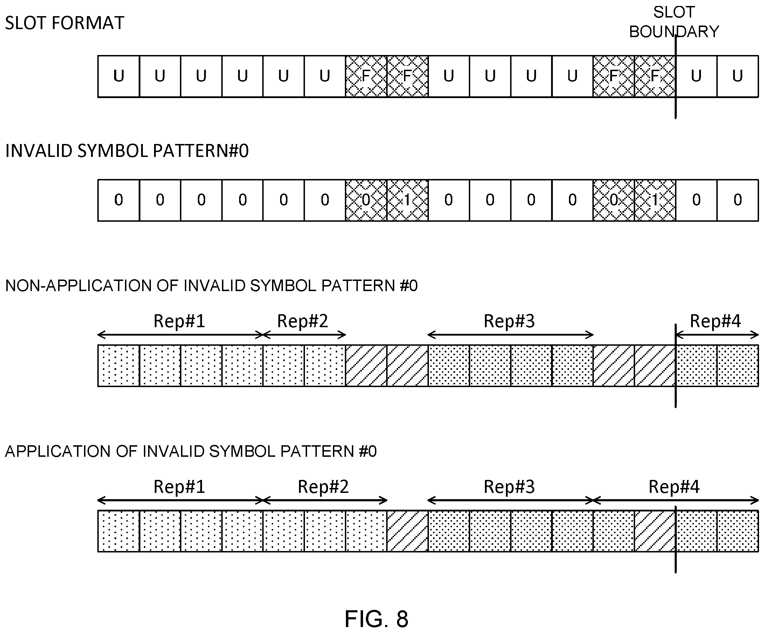

For example, as shown in FIG. 8, when a plurality of configured grants (CG config #0 to #2) are configured for the configured grant-based PUSCH transmission, a different invalid symbol pattern may be configured for each configured grant. In this case, a slot format may be designated commonly for the plurality of the configured grants (or a plurality of invalid symbol patterns), or may be designated separately for each of the plurality of the configured grants.

FIG. 8 shows an example of a case where actual transmission is controlled on the basis of the slot format information and the invalid symbol pattern information. FIG. 8 shows PUSCH transmission control in a case where an invalid symbol pattern (for example, Invalid symbol pattern #0) corresponding to a configured grant (for example, CG config #0) is not applied and in a case where the invalid symbol pattern is applied.

The UE may perform control so as to use a symbol designated as Flexible (F) by the slot format information and designated as non-invalid by the invalid symbol pattern information (for example, a bit value "0" is configured) for the PUSCH transmission. On the other hand, the UE may perform control so as not to use a symbol designated as Flexible (F) by the slot format information and designated as invalid by the invalid symbol pattern information (for example, a bit value "1" is configured) for the PUSCH transmission.

A different invalid symbol pattern may be configured for another configured grant (for example, CG config #1 or #2).

FIG. 8 shows a case where symbols designated as UL by the slot format information are designated as non-invalid by the invalid symbol pattern information (for example, a bit value "0" is configured), but the present disclosure is not limited to this. The symbols designated as UL may be designated as invalid by the invalid symbol pattern information (for example, a bit value "0" is configured). In such a case, it is only necessary that the option 1-2 or 1-3 in the first aspect be applied.

Whether an invalid symbol pattern is applied (or configured) may be configured separately for each configured grant (for example, CG config #0 to #2).

Thus, invalid symbol pattern configuration is configured separately for each configured grant, and thus it is possible to flexibly control PUSCH transmission for each configured grant.

### <Invalid Symbol Pattern Configuration 2>

An invalid symbol pattern (or invalid symbol) may be configured in units of bandwidth parts (for example, UL BWPs) (or for each BWP). For example, when a plurality of BWPs are configured for the configured grant-based PUSCH transmission, an invalid symbol pattern may be associated separately (or different invalid symbol pattern may be associated) for each BWP.

In this case, when a plurality of configured grants (CG config) are configured for one BWP, a common invalid symbol pattern may be configured for the plurality of the configured grants. On the other hand, an invalid symbol pattern may be configured separately for configured grants corresponding to different BWPs.

The same invalid symbol pattern is applied to a plurality of configured grants (CG config) corresponding to the same BWP, and thus an increase in overhead for notification of the invalid symbol pattern can be suppressed.

### <Invalid Symbol Pattern Configuration 3>

An invalid symbol pattern (or invalid symbol) may be configured in units of cells (or CCs).

In this case, when a plurality of BWPs (or a plurality of configured grants (CG config) are configured for one cell, a common invalid symbol pattern may be configured for the plurality of the BWPs (or the plurality of the configured grants). For example, when two UL BWPs are configured for a cell and four configured grants (CG config) are configured for each UL BWP, one (or common) invalid symbol pattern may be applied to eight configured grants.

The same invalid symbol pattern is applied to a plurality of BWPs (or a plurality of configured grants (CG config)) corresponding to the same cell, and thus an increase in overhead for notification of the invalid symbol pattern can be suppressed.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

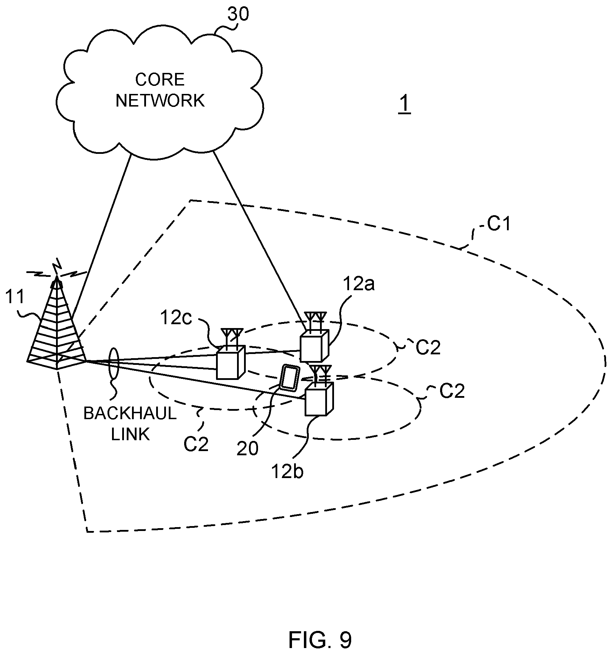

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

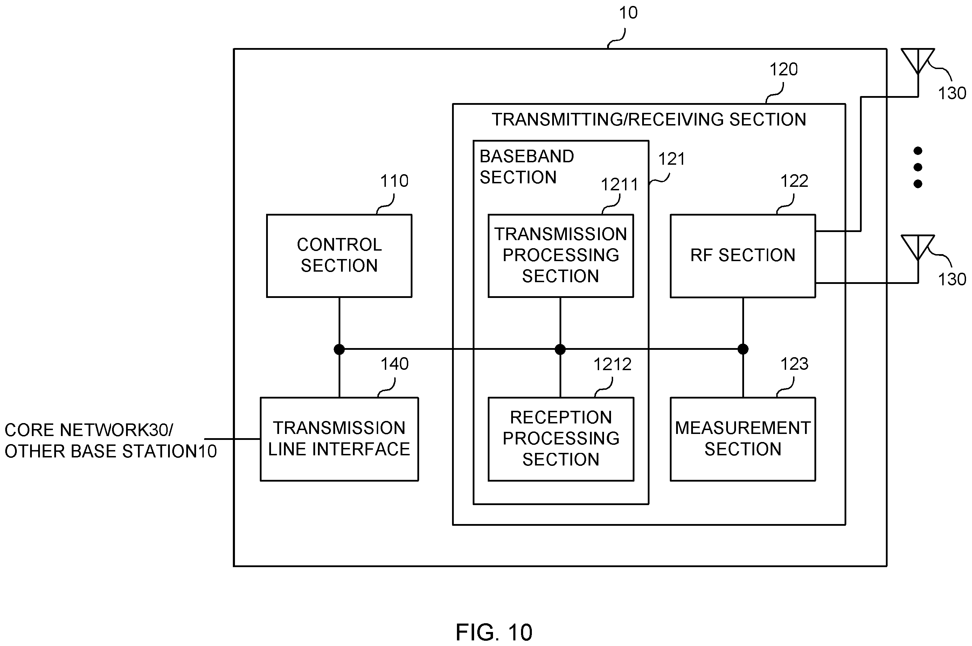

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information related to a slot format and second information related to a symbol pattern invalid in transmission of an uplink shared channel.

The control section 110 may control reception of the uplink shared channel to be performed in a time section designated as UL by at least the first information and also not designated as invalid by the second information.

### (User Terminal)

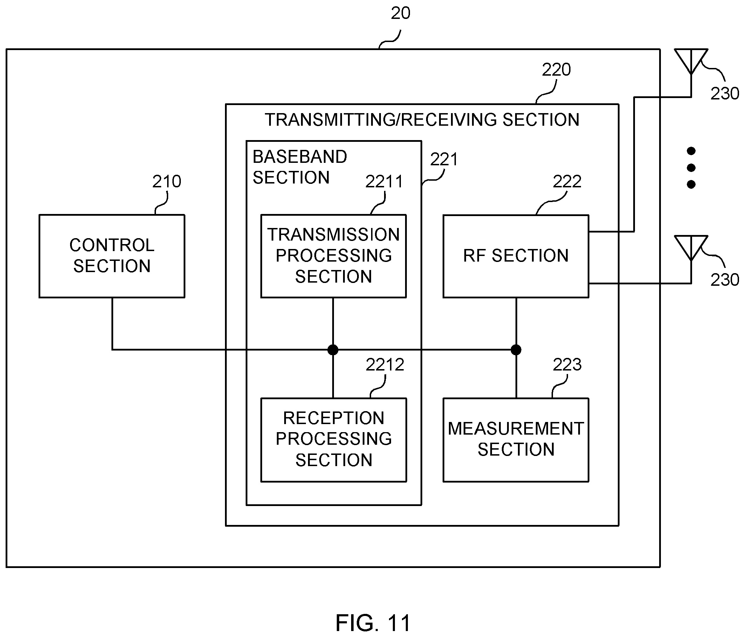

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive the first information related to a slot format and the second information related to a symbol pattern invalid in transmission of an uplink shared channel.

The control section 210 may control the transmission of the uplink shared channel to be performed in a time section designated as UL by at least the first information and not designated as invalid by the second information.

For example, the control section 210 may assume that a time section designated as UL by the first information is notified by the second information as not being an invalid symbol pattern. Alternatively, the control section 210 may control the transmission of the uplink shared channel to be performed in a time section designated as UL by the first information and designated as invalid in the transmission of the uplink shared channel by the second information. Alternatively, the control section 210 may control the transmission of the uplink shared channel not to be performed in the time section designated as UL by the first information and designated as invalid in the transmission of the uplink shared channel by the second information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

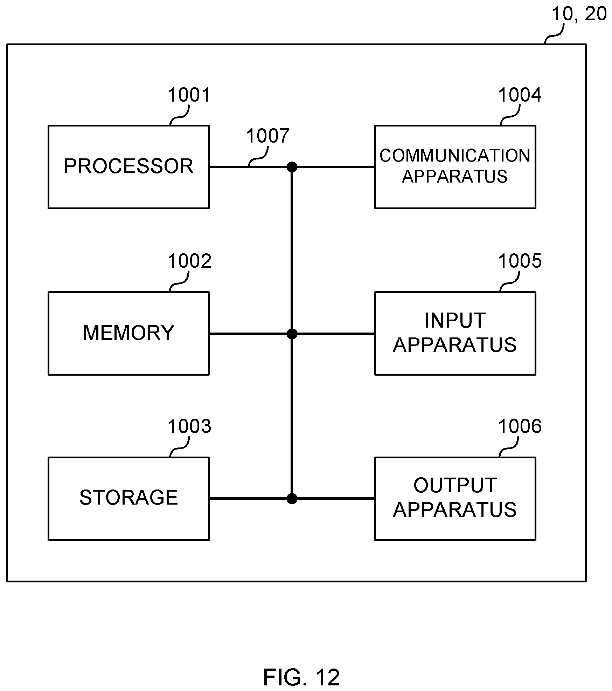

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the scope of claims. Consequently, the description of the present disclosure is provided only for the purpose of explaining examples, and should by no means be construed to limit the invention according to the present disclosure in any way.

## Claims

1. A terminal (20) comprising:
a receiving section (220) that receives first information indicating a slot format, second information indicating, in bit map format, a symbol pattern that is invalid in transmission of an uplink shared channel to which repetition is applied, and third information indicating that downlink control information includes a field notifying whether the invalid symbol pattern is applied; and
a control section (210) that, when the invalid symbol pattern is configured in units of bandwidth parts, and the field included in the downlink control information indicates that the invalid symbol pattern is applied, determines that a symbol indicated as invalid by the second information and a symbol indicated as DL by the first information are invalid in transmission of the uplink shared channel,
wherein when a plurality of configured grant-based uplink shared channels are configured in a single bandwidth part, a common invalid symbol pattern is configured for the plurality of configured grant-based uplink shared channels.

2. The terminal (20) according to claim 1, wherein invalid symbol patterns are configured separately for configured grant-based uplink shared channels corresponding to different bandwidth parts.

3. A radio communication method for a terminal (20), comprising
receiving first information indicating a slot format, second information indicating, in bit map format, a symbol pattern that is invalid in transmission of an uplink shared channel to which repetition is applied, and third information indicating that downlink control information includes a field notifying whether the invalid symbol pattern is applied; and
when the invalid symbol pattern is configured in units of bandwidth parts, and the field included in the downlink control information indicates that the invalid symbol pattern is applied, determining that a symbol indicated as invalid by the second information and a symbol indicated as DL by the first information are invalid in transmission of the uplink shared channel,
wherein when a plurality of configured grant-based uplink shared channels are configured in a single bandwidth part, a common invalid symbol pattern is configured for the plurality of configured grant-based uplink shared channels.

4. A base station (10) comprising:
a transmitting section (120) that transmits first information indicating a slot format, second information indicating, in bit map format, a symbol pattern that is invalid in transmission of an uplink shared channel to which repetition is applied, and third information indicating that downlink control information includes a field notifying whether the invalid symbol pattern is applied; and
a control section (110) that, when the invalid symbol pattern is configured in units of bandwidth parts, and the field included in the downlink control information indicates that the invalid symbol pattern is applied, indicates, by the second information and the first information, symbols that are invalid in transmission of the uplink shared channel,
wherein when a plurality of configured grant-based uplink shared channels are configured in a single bandwidth part, a common invalid symbol pattern is configured for the plurality of configured grant-based uplink shared channels.

5. A system comprising a terminal (20) and a base station (10), wherein
the terminal (20) comprises:
a receiving section (220) that receives first information indicating a slot format, second information indicating, in bit map format, a symbol pattern that is invalid in transmission of an uplink shared channel to which repetition is applied, and third information indicating that downlink control information includes a field notifying whether the invalid symbol pattern is applied; and
a control section (210) that, when the invalid symbol pattern is configured in units of bandwidth parts, and the field included in the downlink control information indicates that the invalid symbol pattern is applied, determines that a symbol indicated as invalid by the second information and a symbol indicated as DL by the first information are invalid in transmission of the uplink shared channel,
wherein when a plurality of configured grant-based uplink shared channels are configured in a single bandwidth part, a common invalid symbol pattern is configured for the plurality of configured grant-based uplink shared channels, and
the base station (10) comprises:
a transmitting section (120) that transmits the first information, the second information, and the third information; and
a control section (110) that, when the invalid symbol pattern is configured in units of bandwidth parts, and the application of the invalid symbol pattern is indicated, indicates, by the second information and the first information, symbols that are invalid in transmission of the uplink shared channel.

## Patentansprüche

1. Endgerät (20), umfassend:
einen Empfangsabschnitt (220), der erste Informationen empfängt, die ein Slot-Format angeben, zweite Informationen, die in Bitmap-Format ein Symbolmuster angeben, das bei Übertragung eines gemeinsamen Aufwärtsverbindungskanals, auf den Wiederholungen angewendet wird, ungültig ist, und dritte Informationen, die angeben, dass Abwärtskanalsteuerungsinformationen ein Feld einschließen, mit dem mitgeteilt wird, ob das ungültige Symbolmuster angewendet ist; und
einen Steuerungsabschnitt (210), der, wenn das ungültige Symbolmuster in Einheiten von Bandbreitenteilen konfiguriert ist und das in den Abwärtskanalsteuerungsinformationen eingeschlossene Feld angibt, dass das ungültige Symbolmuster angewendet ist, bestimmt, dass ein durch die zweiten Informationen als ungültig angegebenes Symbol und ein durch die ersten Informationen als DL angegebenes Symbol bei der Übertragung des gemeinsamen Aufwärtsverbindungskanals ungültig sind, wobei, wenn eine Vielzahl von konfigurierten, auf Gewährung basierten, gemeinsamen Aufwärtsverbindungskanälen in einem einzigen Bandbreitenteil konfiguriert ist, ein gemeinsames ungültiges Symbolmuster für die Vielzahl von konfigurierten, auf Gewährung basierten, gemeinsamen Aufwärtsverbindungskanäle konfiguriert ist.

2. Endgerät (20) nach Anspruch 1, wobei ungültige Symbolmuster getrennt für konfigurierte, auf Gewährung basierte, gemeinsame Aufwärtsverbindungskanäle konfiguriert sind, die unterschiedlichen Bandbreitenteilen entsprechen.

3. Funkkommunikationsverfahren für ein Endgerät (20), umfassend
Empfangen von ersten Informationen, die ein Slot-Format angeben, zweiten Informationen, die in Bitmap-Format ein Symbolmuster angeben, das bei Übertragung eines gemeinsamen Aufwärtsverbindungskanals, auf den Wiederholungen angewendet wird, ungültig ist, und dritten Informationen, die angeben, dass Abwärtskanalsteuerungsinformationen ein Feld einschließen, mit dem mitgeteilt wird, ob das ungültige Symbolmuster angewendet ist; und
wenn das ungültige Symbolmuster in Einheiten von Bandbreitenteilen konfiguriert ist und das in den Abwärtskanalsteuerungsinformationen eingeschlossene Feld angibt, dass das ungültige Symbolmuster angewendet ist, Bestimmen, dass ein durch die zweiten Informationen als ungültig angegebenes Symbol und ein durch die ersten Informationen als DL angegebenes Symbol bei der Übertragung des gemeinsamen Aufwärtsverbindungskanals ungültig sind,
wobei, wenn eine Vielzahl von konfigurierten, auf Gewährung basierten, gemeinsamen Aufwärtsverbindungskanälen in einem einzigen Bandbreitenteil konfiguriert ist, ein gemeinsames ungültiges Symbolmuster für die Vielzahl von konfigurierten, auf Gewährung basierten, gemeinsamen Aufwärtsverbindungskanäle konfiguriert ist.

4. Basisstation (10), umfassend:
einen Übertragungsabschnitt (120), der erste Informationen überträgt, die ein Slot-Format angeben, zweite Informationen, die in Bitmap-Format ein Symbolmuster angeben, das bei Übertragung eines gemeinsamen Aufwärtsverbindungskanals, auf den Wiederholungen angewendet wird, ungültig ist, und dritte Informationen, die angeben, dass Abwärtskanalsteuerungsinformationen ein Feld einschließen, mit dem mitgeteilt wird, ob das ungültige Symbolmuster angewendet ist; und
einen Steuerungsabschnitt (110), der, wenn das ungültige Symbolmuster in Einheiten von Bandbreitenteilen konfiguriert ist und das in den Abwärtskanalsteuerungsinformationen eingeschlossene Feld angibt, dass das ungültige Symbolmuster angewendet ist, durch die zweiten Informationen und die ersten Informationen Symbole angibt, die bei der Übertragung des gemeinsamen Aufwärtsverbindungskanals ungültig sind,
wobei, wenn eine Vielzahl von konfigurierten, auf Gewährung basierten, gemeinsamen Aufwärtsverbindungskanälen in einem einzigen Bandbreitenteil konfiguriert ist, ein gemeinsames ungültiges Symbolmuster für die Vielzahl von konfigurierten, auf Gewährung basierten, gemeinsamen Aufwärtsverbindungskanäle konfiguriert ist.

5. System, umfassend ein Endgerät (20) und eine Basisstation (10), wobei
das Endgerät (20) Folgendes umfasst:
einen Empfangsabschnitt (220), der erste Informationen empfängt, die ein Slot-Format angeben, zweite Informationen, die in Bitmap-Format ein Symbolmuster angeben, das bei Übertragung eines gemeinsamen Aufwärtsverbindungskanals, auf den Wiederholungen angewendet wird, ungültig ist, und dritte Informationen, die angeben, dass Abwärtskanalsteuerungsinformationen ein Feld einschließen, mit dem mitgeteilt wird, ob das ungültige Symbolmuster angewendet ist; und
einen Steuerungsabschnitt (210), der, wenn das ungültige Symbolmuster in Einheiten von Bandbreitenteilen konfiguriert ist und das in den Abwärtskanalsteuerungsinformationen eingeschlossene Feld angibt, dass das ungültige Symbolmuster angewendet ist, bestimmt, dass ein durch die zweiten Informationen als ungültig angegebenes Symbol und ein durch die ersten Informationen als DL angegebenes Symbol bei der Übertragung des gemeinsamen Aufwärtsverbindungskanals ungültig sind,
wobei, wenn eine Vielzahl von konfigurierten, auf Gewährung basierten, gemeinsamen Aufwärtsverbindungskanälen in einem einzigen Bandbreitenteil konfiguriert ist, ein gemeinsames ungültiges Symbolmuster für die Vielzahl von konfigurierten, auf Gewährung basierten, gemeinsamen Aufwärtsverbindungskanäle konfiguriert ist, und
wobei die Basisstation (10) Folgendes umfasst:
einen Übertragungsabschnitt (120), der die ersten Informationen, die zweiten Informationen und die dritten Informationen überträgt; und
einen Steuerungsabschnitt (110), der, wenn das ungültige Symbolmuster in Einheiten von Bandbreitenteilen konfiguriert ist und die Anwendung des ungültigen Symbolmusters angegeben ist, durch die zweiten Informationen und die ersten Informationen Symbole angibt, die bei der Übertragung des gemeinsamen Aufwärtsverbindungskanals ungültig sind.

## Revendications

1. Terminal (20) comprenant :
une section de réception (220) qui reçoit des premières informations indiquant un format de créneau, des deuxièmes informations indiquant, dans un format en mode point, un motif de symboles qui est invalide dans une transmission d'un canal partagé en liaison montante à laquelle une répétition est appliquée, et des troisièmes informations indiquant que des informations de commande de liaison descendante incluent un champ notifiant si le motif de symboles invalide est appliqué ; et
une section de commande (210) qui, lorsque le motif de symboles invalide est configuré dans des unités de parties de bande passante, et le champ inclus dans les informations de commande de liaison descendante indique que le motif de symboles invalide est appliqué, détermine qu'un symbole indiqué comme invalide par les deuxièmes informations et un symbole indiqué comme DL par les premières informations sont invalides dans une transmission du canal partagé en liaison montante,
dans laquelle, lorsqu'une pluralité de canaux partagés en liaison montante basés sur une autorisation configurée sont configurés dans une seule partie de bande passante, un motif de symboles invalide commun est configuré pour la pluralité de canaux partagés en liaison montante basés sur une autorisation configurée.

2. Terminal (20) selon la revendication 1, dans lequel des motifs de symboles invalides sont configurés séparément pour des canaux partagés en liaison montante basés sur une autorisation configurée correspondant à différentes parties de bande passante.

3. Procédé de communication radio pour un terminal (20), comprenant
une réception de premières informations indiquant un format de créneau, de deuxièmes informations indiquant, dans un format en mode point, un motif de symboles qui est invalide dans une transmission d'un canal partagé en liaison montante à laquelle une répétition est appliquée, et de troisièmes informations indiquant que des informations de commande de liaison descendante incluent un champ notifiant si le motif de symboles invalide est appliqué ; et
lorsque le motif de symboles invalide est configuré dans des unités de parties de bande passante, et le champ inclus dans les informations de commande de liaison descendante indique que le motif de symboles invalide est appliqué, une détermination qu'un symbole indiqué comme invalide par les deuxièmes informations et qu'un symbole indiqué comme DL par les premières informations sont invalides dans une transmission du canal partagé en liaison montante,
dans lequel, lorsqu'une pluralité de canaux partagés en liaison montante basés sur une autorisation configurée est configurée dans une seule partie de bande passante, un motif de symboles invalide commun est configuré pour la pluralité de canaux partagés en liaison montante basés sur une autorisation configurée.

4. Station de base (10) comprenant :
une section de transmission (120) qui transmet des premières informations indiquant un format de créneau, des deuxièmes informations indiquant, dans un format en mode point, un motif de symboles qui est invalide dans une transmission d'un canal partagé en liaison montante à laquelle une répétition est appliquée, et des troisièmes informations indiquant que des informations de commande de liaison descendante incluent un champ notifiant si le motif de symboles invalide est appliqué ; et
une section de commande (110) qui, lorsque le motif de symboles invalide est configuré dans des unités de parties de bande passante, et le champ inclus dans les informations de commande de liaison descendante indique que le motif de symboles invalide est appliqué, indique, par les deuxièmes informations et les premières informations, des symboles qui sont invalides dans une transmission du canal partagé en liaison montante,
dans laquelle, lorsqu'une pluralité de canaux partagés en liaison montante basés sur une autorisation configurée sont configurés dans une seule partie de bande passante, un motif de symboles invalide commun est configuré pour la pluralité de canaux partagés en liaison montante basés sur une autorisation configurée.

5. Système comprenant un terminal (20) et une station de base (10), dans lequel
le terminal (20) comprend :
une section de réception (220) qui reçoit des premières informations indiquant un format de créneau, des deuxièmes informations indiquant, dans un format en mode point, un motif de symboles qui est invalide dans une transmission d'un canal partagé en liaison montante à laquelle une répétition est appliquée, et des troisièmes informations indiquant que des informations de commande de liaison descendante incluent un champ notifiant si le motif de symboles invalide est appliqué ; et
une section de commande (210) qui, lorsque le motif de symboles invalide est configuré dans des unités de parties de bande passante, et le champ inclus dans les informations de commande de liaison descendante indique que le motif de symboles invalide est appliqué, détermine qu'un symbole indiqué comme invalide par les deuxièmes informations et un symbole indiqué comme DL par les premières informations sont invalides dans une transmission du canal partagé en liaison montante,
dans laquelle, lorsqu'une pluralité de canaux partagés en liaison montante basés sur une autorisation configurée sont configurés dans une seule partie de bande passante, un motif de symboles invalide commun est configuré pour la pluralité de canaux partagés en liaison montante basés sur une autorisation configurée, et
la station de base (10) comprend :
une section de transmission (120) qui transmet les premières informations, les deuxièmes informations, et les troisièmes informations ; et
une section de commande (110) qui, lorsque le motif de symboles invalide est configuré dans des unités de parties de bande passante, et l'application du motif de symboles invalide est indiquée, indique, par les deuxièmes informations et les premières informations, des symboles qui sont invalides dans une transmission du canal partagé en liaison montante.
